(19) Europäisches Patentamt
European Patent Office
Office européen des brevets

(11) EP 3 260 288 B1

(12) **EUROPEAN PATENT SPECIFICATION**

(45) Date of publication and mention
of the grant of the patent:
**20.02.2019 Bulletin 2019/08**

(21) Application number: **17177394.8**

(22) Date of filing: **22.06.2017**

(51) Int Cl.:
**B32B 5/02** *(2006.01)*      **B32B 5/14** *(2006.01)*
**B32B 27/08** *(2006.01)*     **B32B 27/12** *(2006.01)*
**B32B 27/18** *(2006.01)*     **B32B 27/20** *(2006.01)*
**B32B 27/32** *(2006.01)*     **B32B 37/08** *(2006.01)*
**B32B 3/30** *(2006.01)*      **B60R 13/00** *(2006.01)*
**B29L 31/30** *(2006.01)*     **B29C 43/14** *(2006.01)*
**B29K 311/10** *(2006.01)*    **B29C 43/18** *(2006.01)*
**B29K 105/06** *(2006.01)*

(54) **METHOD FOR FINISHING A VISIBLE SIDE OF AN INTERIOR PART OF PRESSED FIBER MATERIAL IN VARIOUS COLOURS AND INTERIOR PART HAVING A VISIBLE SIDE FINISHED IN VARIOUS COLOURS**

VERFAHREN ZUR NACHBEHANDLUNG DER SICHTSEITE EINES INNENTEILS AUS EINEM ABGEPRESSTEN FASERIGEN WERKSTOFF IN VERSCHIEDENEN FARBEN UND EIN INNENTEIL WOBEI DIE SICHTSEITE IN VERSCHIEDENEN FARBEN NACHBEHANDELT IST

PROCÉDÉ DE FINITION DE LA FACE VISIBLE D'UNE PARTIE INTÉRIEUR EN MATIÈRE FIBREUSE PRESSURÉE EN COULEURS DIVERS ET UNE PARTIE INTÉRIEUR DOTÉ D'UNE FACE VISIBLE EN COULEURS DIVERS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2016 NL 2017026**

(43) Date of publication of application:
**27.12.2017 Bulletin 2017/52**

(73) Proprietor: **Apeldoorn Flexible Packaging B.V.
7336 AZ Apeldoorn (NL)**

(72) Inventors:
• **BUIT, Marnix Elmar
3823 TH AMERSFOORT (NL)**
• **VAN ORIZANDE, Johan
7323 LB APELDOORN (NL)**
• **VAN DE VOSSE, John
7131 VA LICHTENVOORDE (NL)**

(74) Representative: **Bartelds, Erik et al
Arnold & Siedsma
Bezuidenhoutseweg 57
2594 AC The Hague (NL)**

(56) References cited:
**EP-A2- 1 055 512    DE-U1- 29 908 484
US-A- 5 019 197     US-A1- 2003 022 009**

**Description**

The invention relates to a method for finishing a visible side of an interior part of pressed fibre material and to an interior part having such a finished visible side. The invention relates particularly to a method as described in the preamble of claim 1 and an interior part as described in the preamble of claim 11. Such a method and interior part are known, e.g. from WO 2011/134983 A1. Prior art document EP 1 055 512 A2 also discloses such a method, which is used for an exterior part of a vehicle.

It is known conventionally to manufacture interior parts, for instance parts of the interior of a motor vehicle, from plastic. Harder or softer plastics are used here depending on the location of the respective part in the interior and the price class of the associated motor vehicle. It is also conventionally known to cover interior parts in motor vehicles with wood veneer, while for some vehicles in the higher price classes finishes are also found in real wood coated with one or more layers of clear varnish. In vehicles with a more sporty look interior parts are often provided with an imprint which imitates the surface of a carbon fibre panel, while in more expensive vehicles real carbon fibre panels are also applied. Finally, it is known to cover interior parts of vehicles in the higher price class with leather.

In recent years use has increasingly been made of pressed fibre materials for interior parts, wherein particularly materials on the basis of natural fibres are gaining in popularity. This is associated with the increasing demand for sustainable production methods and with minimizing the use of scarce raw materials such as are necessary for the production of plastic components. Components of pressed fibre material can however not be applied as a matter of course in a vehicle because their surface is not suitable to function as outer layer. These surfaces are for example usually porous and relatively rough, whereby they have an unpleasant feel and wear quickly.

Interior parts manufactured from pressed fibre material must therefore be covered with one or more protective layers. Because the appearance of pressed fibre material is not particularly attractive, use has often been made heretofore for covering thereof of a textile material which is glued onto the visible side of the interior part of pressed fibre material. This is relatively labour-intensive and requires a considerable amount of material in addition to the pressed fibre material of the interior part itself. Textile material is moreover not stretchable, or hardly so, whereby there is the risk that it will tear when an interior part covered therewith is pressed to a desired final shape.

The above-identified prior art document WO 2011/134983 A1 discloses an interior component of pressed fibre material which is covered with one or more transparent layers of film, whereby the pressed fibre material is protected in liquid-tight and scratch-resistant manner from the surroundings.

The above-identified prior art document EP 1 055 512 A2 discloses a molded article including a plastic layer and an outer film over the plastic layer forming a composite laminate with the plastic layer and a process for preparing same. The outer film has an inner surface adjacent and bonded to the plastic layer and an outer surface opposed to the inner surface. The molded article also includes a reinforcing material adhered to the inner surface of the outer film layer and at least partly embedded in the inner surface of the outer film layer.

US 2003/022009 A1 describes a layered composite material consisting of four layers, namely a backing manufactured from a thermoplastic material with fillers, for instance flax, therein, an intermediate layer (in the form of a film or web) manufactured from the same thermoplastic material as the backing, a decorative layer with a relief or a colour or both, and an outer layer fixed by heating and manufactured from a thermoset plastic, for instance paper saturated with a synthetic resin. This document makes no further reference to colours.

Described in US 5 019 197 A is a method for forming a laminate wherein a layer of material, for instance a fibre material or a foam, is impregnated with a synthetic resin. One or more other layers are subsequently arranged thereon, including a decorative cover layer with a rear side of soft foam material. Referred to in an example is a layer in which natural fibres are incorporated, although there is no mention here of a decorative outer layer.

The invention now has for its object to provide a method for finishing a visible side of an interior part of pressed fibre material wherein the above stated drawbacks do not occur, or at least do so to lesser extent. According to the present invention this is achieved with a method as described in the preamble in that a surface of the visible side is formed by partially protruding fibres and the matrix material, and at least two layers of differently coloured material are arranged on the visible side, wherein each layer of coloured material comprises a film pressed onto the visible side of the interior part, wherein one of the coloured films is pressed directly onto the interior part and wherein each film is at least partially translucent or transparent.

The use of natural fibres such as hemp, jute, kenaf, sisal or flax in the pressed fibre material of the interior part results in a highly sustainable use of material. Thermoplastic plastics, thermosetting plastics and elastomers are suitable as matrix material. The natural effect of the pressed fibre material is retained in that the film is at least partially translucent or transparent. Owing to the differently coloured materials the structure of the pressed fibre material becomes visible, whereby the appearance of the interior part is enhanced or embellished so that the interior part is suitable for use in motor vehicles. Because the coloured materials are supplied as films, they can be arranged very easily on the visible side.

Because the fibre material is relatively rough, dyes of the film which is pressed directly thereon will adhere easily to the fibres. The matrix material is more dense and does not allow adhesion. The fibre material will hereby take on the colour of the layer arranged thereon first, after which the following layer no longer adheres thereto, while the matrix material carries the layers in the sequence in which they are applied, so that the colour of the finally applied layer will be visible there.

According to a first aspect of the method, the differently coloured films are pressed in successive operations onto the visible side of the interior part. The starting material for the interior part will in practice often have to be pressed to the desired thickness and final shape in multiple steps so that these pressing operations can then be used simultaneously in efficient manner to arrange the successive layers of coloured film material.

It is on the other hand also possible to envisage the differently coloured films being pressed in a single operation onto the visible side of the interior part. An efficient method is thus obtained which can be performed relatively quickly, easily and at low cost.

In view of the different functions the film must fulfil, it can be advantageous for the films to be integrated in a multilayer film, at least some layers of which are differently coloured.

For an optimal effect it is preferred that each layer of coloured material has a colour differing from the colour of the visible side of the pressed fibre material.

The film is advantageously a plastic film. Plastic films are generally not very costly and can be manufactured in substantially any desired thickness, desired quality and desired size, wherein substantially any desired property can also be incorporated.

In order to protect the pressed fibre material it is preferred that the film displays one or more of the following properties: liquid tightness, scratch resistance and/or UV resistance.

A relief is preferably formed in the visible side of the interior part prior to or simultaneously with arranging of the at least two layers of differently coloured material. Because of the coloured material the pattern of the relief becomes visible, whereby the appearance of the interior part is further enhanced and embellished. Because the fibre material is more strongly compressed in the recessed parts of the relief than in the higher parts of the visible side, the surface of the recessed parts is relatively more dense than the surface of the non-recessed parts, whereby the dye will penetrate the fibre material less easily there. The recessed parts of the relief are hereby visible in the final interior part due to a higher degree of colouring than in the higher parts of the visible side.

The relief can advantageously be formed in a regular pattern in the visible side of the interior part. Regular patterns are less distracting to a driver than irregular patterns and are therefore preferred from the viewpoint of traffic safety when the interior part is applied in a motor vehicle.

The relief can be formed in simple manner in the visible side of the interior part by pressing.

In some embodiments it can also be worthwhile, after pressing on the or each film, to subject the interior part to an additional pressing operation.

As stated, the pressed fibre material must sometimes undergo multiple pressing operations in order to obtain the desired final thickness and final shape. The fibre material can for this purpose already be pre-pressed prior to arranging the at least two layers of differently coloured material.

As stated, pressing on the coloured films and/or pressing in the relief can form part of the pressing operations which the material has to undergo. The interior part can be pressed here into the desired final shape during one or more of the pressing operations.

The invention also relates to an interior part of pressed fibre material which can be obtained by applying the above described method. An interior part of the type described in the preamble is characterized according to the invention in that a surface of the visible side is formed by partially protruding fibres and the matrix material, and the visible side is provided with a finish comprising at least two layers of coloured material arranged on the visible side, wherein the at least two layers are differently coloured, wherein each layer of coloured material comprises a film pressed onto the visible side of the interior part, wherein one of the coloured films is pressed directly onto the interior part and wherein each film is at least partially translucent or transparent.

Preferred embodiments of the interior part according to the invention form the subject-matter of the dependent claims 12-15.

The invention will now be elucidated on the basis of a number of examples, wherein reference is made to the accompanying figures, in which:

Fig. 1A-C show schematically the steps with which a stack of fibre material is pre-pressed to a plate of a first thickness,

Fig. 2A-C show schematically the steps with which two layers of differently coloured film material are pressed onto a side of the plate of pre-pressed fibre material which will form the visible side of an interior part,

Fig. 3A-C show schematically the steps with which the plate with the films thereon is pressed to form an interior part, wherein its thickness is further reduced,

Fig. 4 is a schematic section on enlarged scale through the visible side of the interior part of Fig. 3C which shows how the coloured material is distributed over the surface,

Fig. 5 is a detail view on enlarged scale along arrow V in Fig. 4 of the visible side of the interior part,

Fig. 6A-D show schematically the different steps of forming and finishing an interior part with a single coloured layer and a non-coloured transparent layer,

Fig. 7A-D shows a diagram corresponding to Fig. 6A-D of the forming and finishing of an interior part with two differently coloured layers,

Fig. 8A-D shows a diagram corresponding to Fig. 6A-D and Fig. 7A-D of the forming and finishing of an interior part with two differently coloured films, one of which is multilayer and has a transparent cover layer in addition to a coloured layer,

Fig. 9 is a schematic top view showing a number of possible patterns which can be formed with the method according to the invention, and

Fig. 10 is a schematic perspective view of an interior part according to the invention.

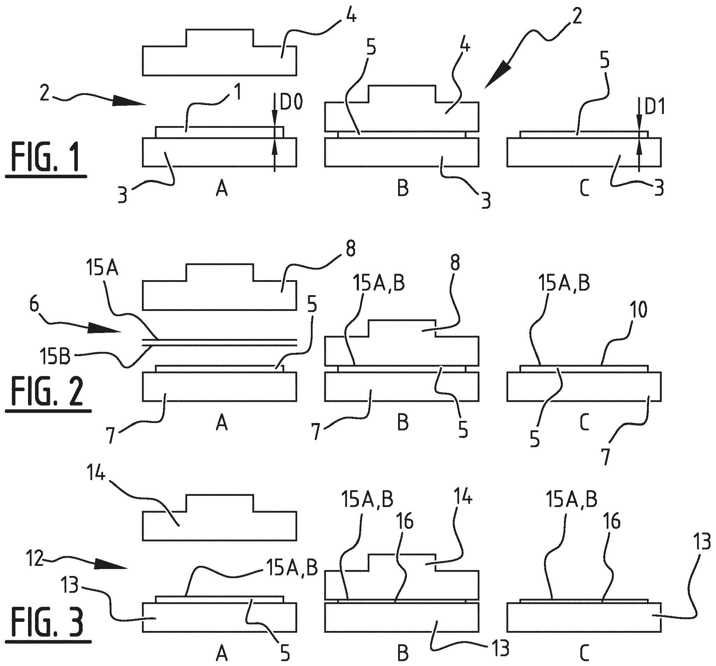

A method for finishing an interior part formed from a pressed fibre material begins in the shown embodiment with pre-pressing of the starting material, a stack 1 formed by fibres in a matrix material. The fibres in this embodiment can here be natural fibres such as kenaf, while a plastic such as polypropylene (PP) can be selected as matrix material. This stack 1 is laid onto a lower mould 3 of a press 2 (Fig. 1A), after which an upper mould 4 is moved toward lower mould 3 and stack 1 is compressed (Fig. 1B). Following compression or pressing a plate-like intermediate product 5 results with a reduced first thickness D1 (Fig. 1C) relative to a starting thickness D0 of stack 1. During the pre-pressing the starting material can also be already heated in order to melt the matrix material - in any case at least partially - whereby the fibres are bound in the matrix.

In a subsequent processing step the pre-pressed plate 5 can be placed on lower mould 7 of a second press 6 below an upper mould 8 (Fig. 2A). A plurality of films 15A, 15B of differently coloured material are also placed here on upper side 10 (shown for the sake of clarity at a distance thereabove in Fig. 2A). Lower film 15B lies directly here, so without interposing of other layers, on the pressed fibre material. When upper mould 8 is moved toward lower mould 7 and press 6 is simultaneously heated, films 15A, 15B are pressed onto upper side 10 of plate 5 (Fig. 2B). This upper side 10 is destined to form the visible side during use of the final interior part, i.e. the side which will be visible to persons seated in a motor vehicle in which the interior part is mounted. Because of the high temperature the matrix material melts and films 15A, 15B moreover adhere to upper side 10 of the plate, while a part of the dye as it were migrates from lower film 15B to the fibre material, as will be further elucidated below. When the upper mould is taken away, plate 5 is left with the two differently coloured films 15A, 15B on its upper side 10 - the later visible side. In the shown embodiment the thickness of plate 5 is not further reduced, or hardly so, in this second processing step.

Plate 5 with the two films 15A, 15B on its upper side 10 is subsequently placed on a lower mould 13 of a third press 12 (Fig. 3A). When upper mould 14 of third press 12 is moved downward (Fig. 3B) the plate with films 15A, 15B thereon is compressed to an end product, the interior part 16, which has a second thickness D2 which is again smaller than the thickness D1 of the intermediate

product (Fig. 3C):

$$D2 < D1 < D0$$

As shown schematically in Fig. 3C, the visible side 10 of interior part 16 is covered with two differently coloured films 15A, 15B after the final pressing operation.

Although a flat interior part 16 is formed in the shown embodiment, it will in practice not usually have a flat form. Interior part 16 is intended as functional and aesthetic covering of a part of the construction of a motor vehicle, and will therefore often have a complicated shape. In practice the lower and upper moulds 13, 14 of third press 12 will thus be profiled.

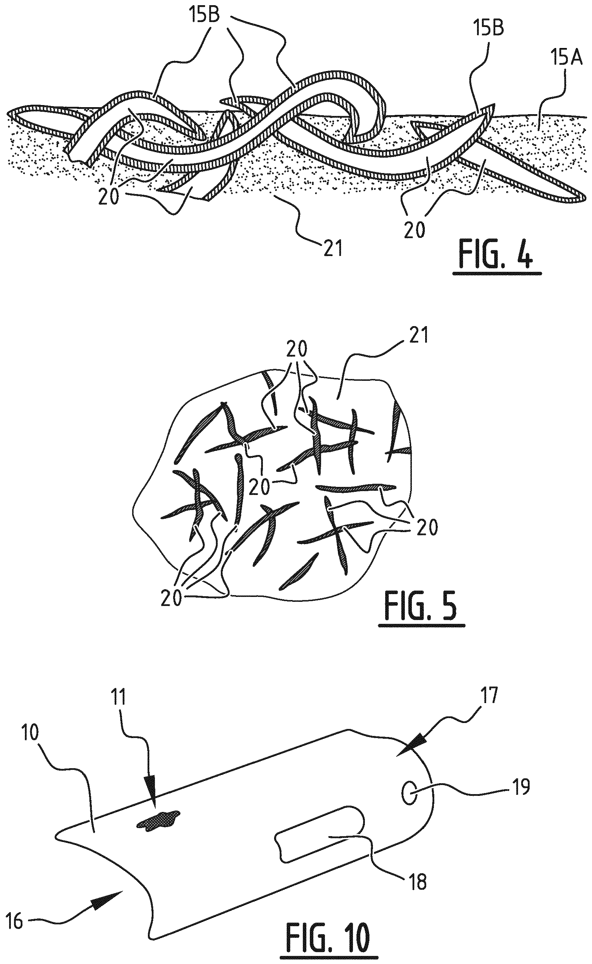

An example of an interior part 16 which can be formed by applying the above described method is shown in Fig. 10. Shown here is a part of a dashboard 17 which is provided in the shown example with cutaway portions 18, 19 for respectively a flap of a glove compartment and an outlet opening of a climate control system.

The surface of plate 5 of pressed fibre material onto which films 15A, 15B are pressed is formed by (parts of) fibres 20 and by matrix material 21 in which fibres 20 are embedded (Fig. 4). Fibres 20 protrude outside matrix material 21 and have a relatively rough surface, while matrix material 21 is relatively dense. When the first or lower coloured film 15B is pressed onto upper side 10 of plate 5 - the later visible side 10 of the interior part - while simultaneously being heated, the melted film 15B will adhere to the surface of fibres 20, which will thereby take on the colour of lower film 15B. Because matrix material 21 is much more dense, film 15B will not adhere thereto. If the second or upper film 15A, which has another colour, is then pressed onto plate 5 with the first or lower film 15B thereon, this film 15A will then also melt, but will not adhere to first film 15B on fibres 20. The material of second film 15A then accumulates in the spaces between fibres 20 on top of matrix material 21. The colour of upper film 15A then determines the appearance there. Fibres 20 are covered with a layer of the lower film 15B, which determines the colour of fibres 20.

A two-colour pattern is thus formed, wherein fibres 20 have the colour of first or lower film 15B and the intermediate areas with matrix material 21 have the colour of second or upper film 15A (Fig. 5).

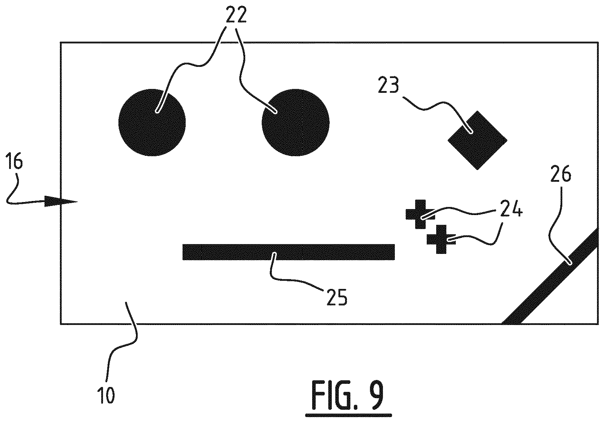

This effect can be further enhanced when a relief 11 is also arranged in visible side 10 of interior part 16, preferably in a regular pattern, such as intersecting grooves (as shown in the detail of Fig. 10). Also important in this case as well as the differences in porosity between fibres 20 on the one hand and matrix material 21 on the other are the differences in density between the bottoms of the recessed parts (grooves) of relief 11 on the one hand and the intermediate parts of visible side 10 on the other. Relief 11 can then take the form of a regular pattern, but can also take any other desired form. As shown in Fig. 9, the invention makes it possible to provide interior parts 16 with the most diverse figures in a contrasting colour. In addition to the shown geometric figures such as circle 22, square 23, cross 24, rectangle 25 and trapezium 26, random irregular and non-repetitive shapes can also be envisaged.

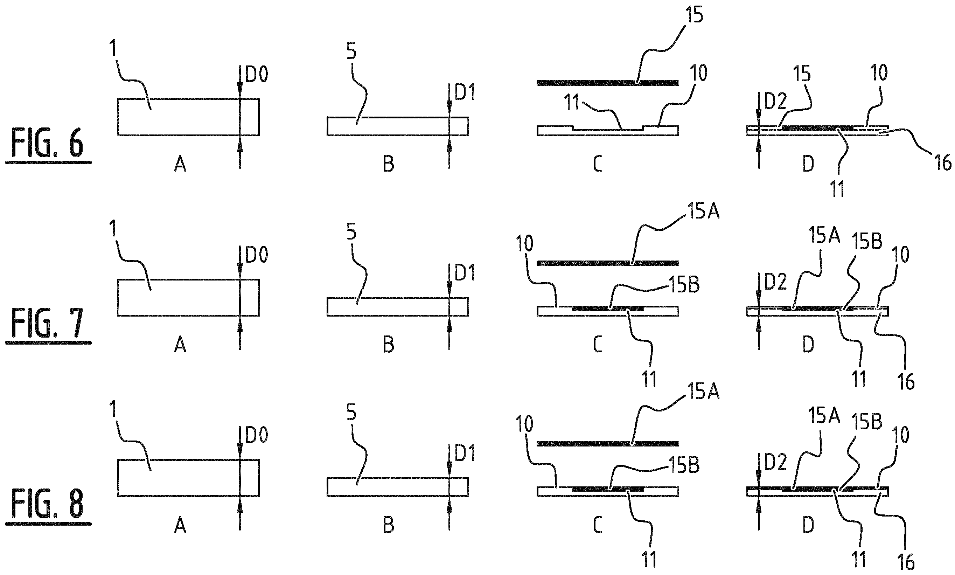

Shown in Fig. 6 to 8 are several other variants of interior parts 16 finished in the manner as described above, including the most important steps taken for this purpose. Use is made in all cases of a stack 1 formed by fibres in a matrix material which has a thickness D0 (Fig. 6A, 7A, 8A). This stack is compressed in a first operation to a plate 5 with a thickness D1 (Fig. 6B, 7B, 8B). In a subsequent processing step (not shown here) plate 5 is compressed still further to a thickness D2, and a relief 11 is moreover arranged therein.

In a first variant of the method a film 15 consisting of a coloured layer and a transparent cover layer is then pressed directly, without interposing of other layers, onto visible side 10 of interior part 16 (Fig. 6C). The coloured material of film 15 will partially accumulate here in relief 11 which is more strongly compacted relative to the surrounding part of the interior part. In addition, film 15 will partially penetrate the upper layer of visible side 10, whereby an interior part 16 is formed as shown in Fig. 6D, with a relatively more strongly coloured part at the location of relief 11 and a relatively lighter part therearound.

In another variant a coloured material 15B is first arranged in relief 11 of interior part 16, for instance in the form of a film fitting therein. A film 15A of a differing colour is then pressed thereon (Fig. 7C). In this case the resulting interior part will on the one hand take on the colour of film 15A which adheres to the fibres on the surface of visible side 10 around relief 11 and on the other that of film 15B in relief 11.

Shown finally in the third variant is how relief 11 is first filled with a film 15B and a multilayer film 15A is then pressed thereon. The multilayer film 15A has in the shown example a coloured and a transparent layer (Fig. 8C). The resulting colour of visible side 10 of interior part 16 is thus now determined by the colour which adheres to the fibres 20 which protrude from visible side 10 and the uppermost colour held fast by the underlying layers of films 15A, 15B.

Although the invention has been elucidated above on the basis of a number of embodiments, it will be apparent that it is not limited thereto but can be varied in many ways. Reference has thus been made for instance up to this point to interior parts for motor vehicles, but the invention can also be applied to interior parts of other transport means such as aircraft and vessels, and even to other components of pressed fibre material. Starting materials other than discussed above can further be applied for the fibres and the matrix. In addition, the invention is not limited to the use on the visible side of an interior part, but the whole interior part could be finished in the described manner if this were to be desired for one reason or another.

The scope of the invention is therefore defined solely by the following claims.

## Claims

1. Method for finishing a visible side (10) of an interior part (16) of pressed fibre material, which pressed fibre material comprises natural fibres (20) incorporated in a plastic matrix material (21), **characterized in that:**

   a surface of the visible side (10) is formed by partially protruding fibres (20) and the matrix material (21), and
   at least two layers of differently coloured material are arranged on the visible side (10), wherein each layer of coloured material comprises a film (15A, 15B) pressed onto the visible side (10) of the interior part (16), wherein one (15B) of the coloured films (15A, 15B) is pressed directly onto the interior part (16) and wherein each film (15A, 15B) is at least partially translucent or transparent.

2. Method as claimed in claim 1, **characterized in that** the differently coloured films (15A, 15B) are pressed in successive operations onto the visible side (10) of the interior part (16).

3. Method as claimed in claim 1, **characterized in that** the differently coloured films (15A, 15B) are pressed in a single operation onto the visible side (10) of the interior part (16), wherein the films (15A, 15B) are optionally integrated in a multilayer film, at least some layers of which are differently coloured.

4. Method as claimed in any of the foregoing claims, **characterized in that** each layer of coloured material has a colour differing from the colour of the visible side (10) of the pressed fibre material.

5. Method as claimed in any of the foregoing claims, **characterized in that:**

   the or each film (15A, 15B) is a plastic film; and/or
   the or each film (15A, 15B) displays one or more of the following properties:

   liquid tightness, scratch resistance and/or UV resistance.

6. Method as claimed in any of the foregoing claims, **characterized in that** a relief (11) is formed in the visible side (10) of the interior part (16) prior to or simultaneously with arranging of the at least two layers of differently coloured material, wherein the relief (11) is optionally formed in a regular pattern in the visible side (10) of the interior part (16).

7. Method as claimed in claim 6, **characterized in that** the relief (11) is formed in the visible side (10) of the interior part (16) by pressing.

8. Method as claimed in any of the foregoing claims, **characterized in that** after pressing on the or each film (15A, 15B) the interior part (16) is subjected to an additional pressing operation.

9. Method as claimed in any of the foregoing claims, **characterized in that** the fibre material is pre-pressed prior to arranging the at least two layers of differently coloured material.

10. Method as claimed in any of the foregoing claims, **characterized in that** the interior part (16) is pressed into a desired final shape during one or more of the pressing operations.

11. Interior part (16) of pressed fibre material, which pressed fibre material comprises natural fibres (20) incorporated in a plastic matrix material (21), wherein the interior part (16) comprises a visible side (10), **characterized in that** a surface of the visible side (10) is formed by partially protruding fibres (20) and the matrix material (21), and the visible side (10) is provided with a finish comprising at least two layers of coloured material arranged on the visible side (10), wherein the at least two layers are differently coloured, wherein each layer of coloured material comprises a film (15A, 15B) pressed onto the visible side (10) of the interior part (16), wherein one of the coloured films (15A, 15B) is pressed directly onto the interior part (16) and wherein each film (15A, 15B) is at least partially translucent or transparent.

12. Interior part (16) as claimed in claim 11, **characterized in that** the films (15A, 15B) are integrated in a multilayer film, at least some layers of which are differently coloured.

13. Interior part (16) as claimed in claim 11 or 12, **characterized in that** each layer of coloured material has a colour differing from the colour of the visible side (10) of the pressed fibre material.

14. Interior part (16) as claimed in any of the claims 11-13, **characterized in that:**

the or each film (15A, 15B) is a plastic film; and/or
the or each film (15A, 15B) displays one or more of the following properties:

liquid tightness, scratch resistance and/or UV resistance.

15. Interior part (16) as claimed in any of the claims 11-14, **characterized in that** the finish further comprises a relief (11) formed in the visible side (10) of the interior part (16), wherein the relief (11) is optionally formed in a regular pattern in the visible side (10) of the interior part (16).

**Patentansprüche**

1. Verfahren zum Veredeln einer sichtbaren Seite (10) eines Innenteils (16) aus verpresstem Fasermaterial, wobei das verpresste Fasermaterial natürliche Fasern (20) aufweist, die in ein Kunststoffmatrixmaterial (21) eingearbeitet sind, **dadurch gekennzeichnet, dass**:

eine Oberfläche der sichtbaren Seite (10) durch teilweise vorstehende Fasern (20) und das Matrixmaterial (21) ausgebildet ist, und wenigstens zwei Schichten aus unterschiedlich gefärbtem Material auf der sichtbaren Seite (10) angeordnet sind, wobei jede Schicht aus gefärbtem Material eine Dünnschicht (15A, 15B) aufweist, die auf die sichtbare Seite (10) des Innenteils (16) gepresst ist, wobei eine (15B) der Dünnschichten (15A, 15B) direkt in den Innenteil (16) gepresst wird, und wobei jede Dünnschicht (15A, 15B) wenigstens teilweise transluzent oder transparent ist.

2. Verfahren nach Anspruch 1, **dadurch gekennzeichnet, dass** die unterschiedlich gefärbten Dünnschichten (15A, 15B) in aufeinanderfolgenden Arbeitsschritten auf die sichtbare Seite (10) des Innenteils (16) gepresst werden.

3. Verfahren nach Anspruch 1, **dadurch gekennzeichnet, dass** die unterschiedlich gefärbten Dünnschichten (15A, 15B) in einem einzigen Arbeitsgang auf die sichtbare Seite (10) des Innenteils (16) gepresst werden, wobei die Dünnschichten (15A, 15B) wahlweise zu einer mehrschichtigen Dünnschicht integriert werden, wobei wenigstens einige der Schichten unterschiedlich gefärbt sind.

4. Verfahren nach einem der vorhergehenden Ansprüche, **dadurch gekennzeichnet, dass** jede Schicht aus gefärbtem Material eine Farbe hat, die sich von der Farbe der sichtbaren Seite (10) des verpressten Fasermaterials unterscheidet.

5. Verfahren nach einem der vorhergehenden Ansprüche, **dadurch gekennzeichnet, dass**:

die oder jede Dünnschicht (15A, 15B) eine Kunststoffdünnschicht ist; und/oder

die oder jede Dünnschicht (15A, 15B) eine oder mehrere der folgenden Eigenschaften zeigt: Flüssigkeitsdichte, Kratzfestigkeit und/oder UV-Beständigkeit.

6. Verfahren nach einem der vorhergehenden Ansprüche, **dadurch gekennzeichnet, dass** vor oder gleichzeitig mit der Anordnung der wenigstens zwei Schichten aus unterschiedlich gefärbtem Material ein Relief (11) in der sichtbaren Seite (10) des Innenteils (16) ausgebildet wird, wobei das Relief (11) optional in einem regelmäßigen Muster in der sichtbaren Seite (10) des Innenteils (16) ausgebildet wird.

7. Verfahren nach Anspruch 6, **dadurch gekennzeichnet, dass** das Relief (11) durch Pressen in der sichtbaren Seite (10) des Innenteils (16) ausgebildet wird.

8. Verfahren nach einem der vorhergehenden Ansprüche, **dadurch gekennzeichnet, dass** der Innenteil (16) nach dem Pressen auf oder jeder Dünnschicht (15A, 15B) einem zusätzlichen Pressarbeitsgang unterzogen wird.

9. Verfahren nach einem der vorhergehenden Ansprüche, **dadurch gekennzeichnet, dass** das Fasermaterial vor dem Anordnen der wenigstens zwei Schichten aus unterschiedlich gefärbtem Material vorgepresst wird.

10. Verfahren nach einem der vorhergehenden Ansprüche, **dadurch gekennzeichnet, dass** der Innenteil (16) während eines oder mehrerer der Pressarbeitsgänge in eine gewünschte abschließende Form gepresst wird.

11. Innenteil (11) aus einem verpressten Fasermaterial, wobei das verpresste Fasermaterial natürliche Fasern (20) aufweist, die in ein Kunststoffmatrixmaterial (21) eingearbeitet sind, wobei der Innenteil (16) eine sichtbare Seite (10) aufweist, **dadurch gekennzeichnet, dass** eine Oberfläche der sichtbaren Seite (10) durch teilweise vorstehende Fasern (20) und das Matrixmaterial (21) ausgebildet ist, und die sichtbare Seite (10) mit einer Veredelung versehen ist, die wenigstens zwei Schichten aus unterschiedlich gefärbtem Material, die auf der sichtbaren Seite (10) angeordnet sind, aufweist, wobei die wenigstens zwei Schichten unterschiedlich gefärbt sind, wobei jede Schicht aus gefärbtem Material eine Dünnschicht (15A, 15B) aufweist, die auf die sichtbare Seite (10) des Innenteils (16) gepresst ist, wobei eine der Dünnschichten (15A, 15B) direkt auf den Innenteil (16) gepresst ist, und wobei jede Dünnschicht (15A, 15B) wenigstens teilweise transluzent oder transparent ist.

12. Innenteil (16) nach Anspruch 11, **dadurch gekennzeichnet, dass** die Dünnschichten (15A, 15B) zu einer mehrschichtigen Dünnschicht integriert sind, wobei wenigstens einige Schichten unterschiedlich gefärbt sind.

13. Innenteil (16) nach Anspruch 11 oder 12, **dadurch gekennzeichnet, dass** jede Schicht aus gefärbtem Material eine zu der Farbe der sichtbaren Seite (10) des verpressten Fasermaterials unterschiedliche Farbe hat.

14. Innenteil (16) nach einem der Ansprüche 11 - 13, **dadurch gekennzeichnet, dass**:

die oder jede Dünnschicht (15A, 15B) eine Kunststoffdünnschicht ist; und/oder die oder jede Dünnschicht (15A, 15B) eine oder mehrere der folgenden Eigenschaften zeigt: Flüssigkeitsdichte, Kratzfestigkeit und/oder UV-Beständigkeit.

15. Innenteil (16) nach einem der Ansprüche 11 - 14, **dadurch gekennzeichnet, dass** die Veredelung ferner ein Relief (11), das in der sichtbaren Seite (10) des Innenteils (16) ausgebildet ist, aufweist, wobei das Relief (11) optional in einem regelmäßigen Muster in der sichtbaren Seite (10) des Innenteils (16) ausgebildet ist.

**Revendications**

1. Procédé de finition d'une face visible (10) d'une partie intérieure (16) en matière fibreuse pressée, laquelle matière fibreuse pressée comprend des fibres naturelles (20) incorporées dans une matière de matrice plastique (21), **caractérisé en ce que** :

une surface de la face visible (10) est formée par des fibres partiellement en saillie (20) et la matière de matrice (21), et au moins deux couches de matière de couleurs différentes sont agencées sur la face visible (10), dans lequel chaque couche de matière colorée comprend un film (15A, 15B) pressé sur la face visible (10) de la partie intérieure (16), dans lequel l'un (15B) des films colorés (15A, 15B) est pressé directement sur la partie intérieure (16) et dans lequel chaque film (15A, 15B) est au moins partiellement translucide ou transparent.

2. Procédé selon la revendication 1, **caractérisé en ce que** les films de couleurs différentes (15A, 15B) sont pressés dans des opérations successives sur la face visible (10) de la partie intérieure (16).

3. Procédé selon la revendication 1, **caractérisé en ce que** les films de couleurs différentes (15A, 15B) sont pressés en une seule opération sur la face visible (10) de la partie intérieure (16), dans lequel les films (15A, 15B) sont facultativement intégrés dans un film multicouche, dont au moins certaines couches sont de couleurs différentes.

4. Procédé selon l'une quelconque des revendications précédentes, **caractérisé en ce que** chaque couche de matière colorée a une couleur différente de la couleur de la face visible (10) de la matière fibreuse pressée.

5. Procédé selon l'une quelconque des revendications précédentes, **caractérisé en ce que** :

   le ou chaque film (15A, 15B) est un film plastique; et/ou
   le ou chaque film (15A, 15B) présente une ou plusieurs des propriétés suivantes :

   étanchéité aux liquides, résistance à la rayure et/ou résistance aux UV.

6. Procédé selon l'une quelconque des revendications précédentes, **caractérisé en ce qu'**un relief (11) est formé dans la face visible (10) de la partie intérieure (16) avant ou simultanément à l'agencement des au moins deux couches de matière de couleurs différentes, dans lequel le relief (11) est facultativement formé en un motif régulier dans la face visible (10) de la partie intérieure (16).

7. Procédé selon la revendication 6, **caractérisé en ce que** le relief (11) est formé dans la face visible (10) de la partie intérieure (16) par pressage.

8. Procédé selon l'une quelconque des revendications précédentes, **caractérisé en ce qu'**après le pressage sur le ou chaque film (15A, 15B) la partie intérieure (16) est soumise à une opération de pressage supplémentaire.

9. Procédé selon l'une quelconque des revendications précédentes, **caractérisé en ce que** la matière fibreuse est prépressée avant l'agencement des au moins deux couches de matière de couleurs différentes.

10. Procédé selon l'une quelconque des revendications précédentes, **caractérisé en ce que** la partie intérieure (16) est pressée en une forme finale souhaitée pendant une ou plusieurs des opérations de pressage.

11. Partie intérieure (16) de matière fibreuse pressée, laquelle matière fibreuse pressée comprend des fibres naturelles (20) incorporées dans une matière de matrice plastique (21), dans laquelle la partie intérieure (16) comprend une face visible (10), **caractérisée en ce qu'**une surface de la face visible (10) est formée par des fibres partiellement en saillie (20) et la matière de matrice (21), et la face visible (10) est pourvue d'une finition comprenant au moins deux couches de matière colorée agencées sur la face visible (10), dans laquelle les au moins deux couches sont de couleurs différentes, dans laquelle chaque couche de matière colorée comprend un film (15A, 15B) pressé sur la face visible (10) de la partie intérieure (16), dans laquelle l'un des films colorés (15A, 15B) est pressé directement sur la partie intérieure (16) et dans laquelle chaque film (15A, 15B) est au moins partiellement translucide ou transparent.

12. Partie intérieure (16) selon la revendication 11, **caractérisée en ce que** les films (15A, 15B) sont intégrés dans un film multicouche, dont au moins certaines couches sont de couleurs différentes.

13. Partie intérieure (16) selon la revendication 11 ou 12, **caractérisée en ce que** chaque couche de matière colorée a une couleur différente de la couleur de la face visible (10) de la matière fibreuse pressée.

14. Partie intérieure (16) selon l'une quelconque des revendications 11 à 13, **caractérisée en ce que** :

    le ou chaque film (15A, 15B) est un film plastique; et/ou
    le ou chaque film (15A, 15B) présente une ou plusieurs des propriétés suivantes :

    étanchéité aux liquides, résistance à la rayure et/ou résistance aux UV.

15. Partie intérieure (16) selon l'une quelconque des revendications 11 à 14, **caractérisée en ce que** la finition comprend en outre un relief (11) formé dans la face visible (10) de la partie intérieure (16), dans laquelle le relief (11) est facultativement formé en un motif régulier dans la face visible (10) de la partie intérieure (16).

FIG.1

FIG.2

FIG.3

15B    15B    15A

20

20    20

21

## FIG. 4

20    21

20

20

20

## FIG. 5

11    17

10

19

16    18

## FIG. 10

FIG. 6

A

1

D0

B

5

D1

C

15

11

10

D

D2

15

10

11

16

FIG. 7

A

1

D0

B

5

D1

C

10

15A

15B

11

D

D2

15A

15B

10

11

16

FIG. 8

A

1

D0

B

5

D1

C

10

15A

15B

11

D

D2

15A

15B

10

11

16

EP 3 260 288 B1

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011134983 A1
- EP 1055512 A2
- US 2003022009 A1
- US 5019197 A